# EUROPÄISCHE PATENTSCHRIFT

(11) **EP 4 058 335 B1**
(45) Veröffentlichungstag und Bekanntmachung des Hinweises auf die Patenterteilung: **25.10.2023**
(21) Anmeldenummer: 20804502.1
(22) Anmeldetag: 10.11.2020
(51) Int. Cl.: B60W 50/14, B60W 50/16

(54) **VERFAHREN ZUM BETRIEB EINES KRAFTFAHRZEUGS**
METHOD FOR OPERATING A MOTOR VEHICLE
PROCÉDÉ DE FONCTIONNEMENT D'UN VÉHICULE AUTOMOBILE

(30) Priorität: 12.11.2019 DE 102019130513
(43) Veröffentlichungstag der Anmeldung: 21.09.2022
(73) Patentinhaber: Audi AG, 85045 Ingolstadt (DE)
(72) Erfinder: ZECHERLE, Andreas, 85137 Walting (DE); HAGEN, Harald, 95473 Creußen (DE)
(74) Vertreter: Bierschneider, Walter
(86) Internationale Anmeldenummer: PCT/EP2020/081564
(87) Internationale Veröffentlichungsnummer: WO 2021/094277

(56) Entgegenhaltungen:
- WO-A1-2018/110470
- DE-A1-102009 035 779
- JP-A- S63 145 138
- JP-A- 2010 007 749

## Beschreibung

Die Erfindung betrifft ein Verfahren zum Betrieb eines Kraftfahrzeugs gemäß der im Patentanspruch 1 angegebenen Art.

Die bis heute überwiegend verbreiteten Kraftfahrzeuge mit Verbrennungsmotoren mit mehrstufigen Getrieben zeigen bekanntlich ein Fahrverhalten, das sich dadurch auszeichnet, dass während eines Beschleunigungsvorgangs eine durch einen Gangwechsel hervorgerufene kurzfristige Zugkraftunterbrechung sowie eine aus der Drehmomentänderung resultierende akustisch wahrnehmbare Signalisierung des Gangwechsels auftritt.

Neben einem dynamischen Fahrgefühl werden obige Effekte, nämlich die Zugkraftunterbrechung und die akustische Signalisierung, vom Fahrer oftmals als die Aufmerksamkeit und damit die Konzentration auf das Straßengeschehen erhöhende, unterstützende Hilfsmittel wahrgenommen, was sich positiv auf die Sicherheit im Straßenverkehr auswirkt.

Bei stufenlosen Fahrzeuggetrieben, insbesondere Elektrofahrzeuge, die normalerweise mit nur einer Getriebestufe ausgestattet sind, treten bei einer Beschleunigung obige Effekte, nämlich eine durch einen Gangwechsel hervorgerufene kurzfristige Zugkraftunterbrechung sowie eine akustisch wahrnehmbare Signalisierung des Gangwechsels, nicht auf. Die dadurch bedingte verringerte Aufmerksamkeit kann unter Umständen ein Ermüden des Fahrers zu Folge haben, was sich wiederum negativ auf die Sicherheit im Straßenverkehr auswirkt.

Die DE 10 2009 035 779 A1 offenbart ein Verfahren zum Betreiben eines Getriebes, insbesondere eines leistungsverzweigten Hybridgetriebs für ein Fahrzeug, insbesondere eines Hybrid-Fahrzeugs. Das Verfahren erlaubt eine Simulation eines Betriebs des Getriebes mit einer stufenlos einstellbaren Übersetzung als ein konventionelles Automatikgetriebe. Dies vermittelt einem Fahrer des Fahrzeugs ein angenehmes und von herkömmlichen Getrieben bekanntes Fahrgefühl.

Weitere Verfahren zum Betreiben eines Kraftahrzeugs sind der DE 10 2014 216 678 A1, DE 10 2007 016 420 B4 und DE 10 2008 001 805 A1 zu entnehmen.

Ein gattungsgemäßes Verfahren zum Betrieb eines Kraftfahrzeugs, welches eine Antriebseinheit mit einer unterbrechungsfreien Drehmomentenabgabe aufweist, ist in der WO 2018/110470 A1 offenbart. Entsprechende Verfahren sind auch in der JP 2010 007749 A und JP S63 145138 A beschrieben.

Der Erfindung liegt die Aufgabe zugrunde, ein Verfahren zum Betrieb eines Kraftfahrzeugs, welches eine Antriebseinheit mit einer unterbrechungsfreien Drehmomentenabgabe aufweist, anzugeben, mittels dem die Gefahr einer Ermüdung des Fahrers reduziert wird.

Diese Aufgabe wird durch die Merkmale des Patentanspruches 1 gelöst.

Die Unteransprüche bilden vorteilhafte Weiterbildungen des erfindungsmäßen Verfahrens.

Gemäß dem Verfahren nach Anspruch 1 ist vorgesehen, dass die Antriebseinheit in einem ersten und zweiten Betriebsmodus betrieben werden kann, wobei im ersten Betriebsmodus das Kraftfahrzeug mittels der stufenlosen Drehmomentenabgabe unterbrechungsfrei beschleunigt wird, und im zweiten Betriebsmodus die stufenlose Drehmomentenabgabe in eine gestufte Drehmomentenabgabe umgestellt wird, sodass im zweiten Betriebsmodus das Kraftfahrzeug mittels der gestuften Drehmomentenabgabe unterbrechungsbehaftet beschleunigt wird.

Erfindungsgemäß ist zudem vorgesehen, dass im zweiten Betriebsmodus die Anzahl n der gewünschten Unterbrechungen eingestellt werden kann. D.h. es kann eine beliebige Gang- Gangwechselsimulation zur Verfügung gestellt und damit ein "Schalten ohne Schaltung" generiert werden. So kann z.B. durch eine Auswahl von n=4, ein vierstufiges Getriebe simuliert werden.

Lediglich der Vollständigkeit halber wird darauf hingewiesen, dass unter einer unterbrechungsfreien Beschleunigung des Kraftfahrzeugs zu verstehen ist, dass - wenn dargestellt in einem Beschleunigungskurvendiagramm, in dem das Drehmoment (y-Achse) über der Geschwindigkeit (x-Achse) aufgetragen sind, die Beschleunigungskurve einen stetigen (ungestuften) Verlauf aufweist. Entsprechend ist unter einer unterbrechungsbehafteten Beschleunigung zu verstehen, dass die Beschleunigungskurve einen unstetigen (gestuften) Verlauf aufweist.

Unter einem Kraftfahrzeug, welches eine Antriebseinheit mit einer unterbrechungsfreien Drehmomentenabgabe aufweist, soll nachfolgend insbesondere ein Elektrofahrzeug oder ein Fahrzeug mit einem stufenlosen Automatikgetriebe verstanden werden.

Durch das erfindungsmäße Verfahren ist nunmehr gewährleistet, dass im Falle des Betriebs des Kraftfahrzeugs im zweiten Betriebsmodus, beim Beschleunigen des Kraftfahrzeugs vom Fahrer wahrnehmbare Zugkraftunterbrechungen sowie ein aus der Drehmomentänderung resultierender akustischer Effekt auftreten. Die wahrnehmbaren Zugkraftunterbrechungen und der auftretende akustische Effekt wirken sich positiv auf die Aufmerksamkeit des Fahrers aus, d.h. der Ermüdungseffekt wird reduziert, was sich positiv auf die Sicherheit im Straßenverkehr auswirkt. Ein weiterer Vorteil ist, dass mittels der Umschaltung zwischen den beiden Betriebsmodi potentiellen Neukunden von Elektrofahrzeugen, ein Umstieg erleichtert wird.

Um einen einfach durchzuführenden Wechsel der Betriebsmodi, nämlich vom ersten Betriebsmodus in den zweiten Betriebsmodus bzw. vom zweiten Betriebsmodus in den ersten Betriebsmodus, zu ermöglichen, wird die Umstellung vorzugsweise nach einer einfach auszuführenden, manuellen Bestätigung eines hierfür vorgesehenen Betätigungselements durchgeführt.

Bei dem Betätigungselement kann es sich beispielsweise um ein am Lenkrad angeordnetes Schaltpaddel handeln.

Vorzugsweise ist zudem im zweiten Betriebsmodus der aus einer Unterbrechung resultierende Drehmomentrückgang, mit anderen Worten die Stärke des Drehmomentrückgangs ΔM einstellbar.

Eine weitere bevorzugte Ausführungsform zeichnet sich dadurch aus, dass im zweiten Betriebsmodus auch die zeitliche Dauer t der Unterbrechungen eingestellt werden kann. Die Einstellung der zeitlichen Dauer der Unterbrechungen in Kombination mit Anzahl der Unterbrechungen sowie die Stärke des Drehmomentrückgangs ermöglicht im zweiten Betriebsmodus eine auf bestimmte Bedürfnisse abgestimmte realistische Simulation. Besonders vorteilhaft ist vorgesehen, dass verschiedene Modi, wie z.B. ein Sportmodus, ein Comfortmodus etc., in denen entsprechende Werte für Anzahl n der Unterbrechungen, Stärke des Drehmomentrückgangs ΔM bei einer Unterbrechung sowie Dauer t einer Unterbrechung, voreingestellt sind und entsprechend ausgewählt werden können.

Vorzugsweise wird im zweiten Betriebsmodus bei einer Unterbrechung in der Drehmomentenabgabe ein zusätzliches akustisches Signal erzeugt. Da nun eine Unterbrechung in der Drehmomentenabgabe sowohl durch die Zugkraftunterbrechung, den aus der Drehmomentänderung resultierenden akustischen Effekt als auch noch durch das erzeugte, zusätzliche akustische Signal wahrnehmbar ist, ist in vorteilhafte Weise eine besonders erhöhte Aufmerksamkeit des Fahrers sichergestellt, was einer Ermüdung des Fahrers zusätzlich entgegenwirkt.

Bevorzugt ist dabei vorgesehen, dass die Ausgabe des akustischen Signals aktivierbar bzw. deaktivierbar ist. Hierdurch ist eine auf die Bedürfnisse des Fahrers abgestimmte Individualisierung ermöglicht.

Eine weitere, auf die Bedürfnisse des Fahrers abgestimmte Individualisierung wird dadurch ermöglicht, dass die Art des auszugebenden akustischen Signals aus einer Liste vorgegebener Signale/Geräusche auswählt werden kann. Neben einem einem "normalen Schaltvorgang" nachempfundenen Schaltgeräusch als akustischem Signal, sind in der Liste weitere Signaltöne bzw. Signalgeräusche aufgeführt, die entsprechend ausgewählt werden können.

Bevorzugt wird die Eingabe der Anzahl der gewünschten Unterbrechungen bei der Drehmomentenabgabe, die zeitliche Dauer einer Unterbrechung bei einer Drehmomentenabgabe, die Auswahl der Art des akustischen Signals sowie die Aktivierung/Deaktivierung der Ausgabe des akustischen Signals mittels einem Infotainment-System des Kraftfahrzeugs vorgenommen. Da entsprechende Infotainment-Systeme zur zentralen Steuerung von Radio, Navigation, Multimedia sowie Komfort- und Sicherheitsfunktionen in heutigen Kraftfahrzeugen standardmäßig verbaut sind, ist eine aufwandsarme Eingabe bzw. Einstellung obiger Parameter ermöglicht.

Weitere Vorteile und Anwendungsmöglichkeiten der vorliegenden Erfindung ergeben sich aus der nachfolgenden Beschreibung in Verbindung mit dem in der Zeichnung dargestellten Ausführungsbeispiel.

In der Zeichnung bedeutet:
- Fig. 1: ein Beschleunigungskurvendiagramm, in dem die Beschleunigung des Kraftfahrzeugs im ersten Betriebsmodus dargestellt ist;
- Fig.: 2 ein weiteres Beschleunigungskurvendiagramm, in dem die Beschleunigung des Kraftfahrzeugs gemäß dem zweiten Betriebsmodus erfolgt, und
- Fig. 3: einen vergrößerten Ausschnitt aus dem Beschleunigungskurvendiagramm aus Fig. 2

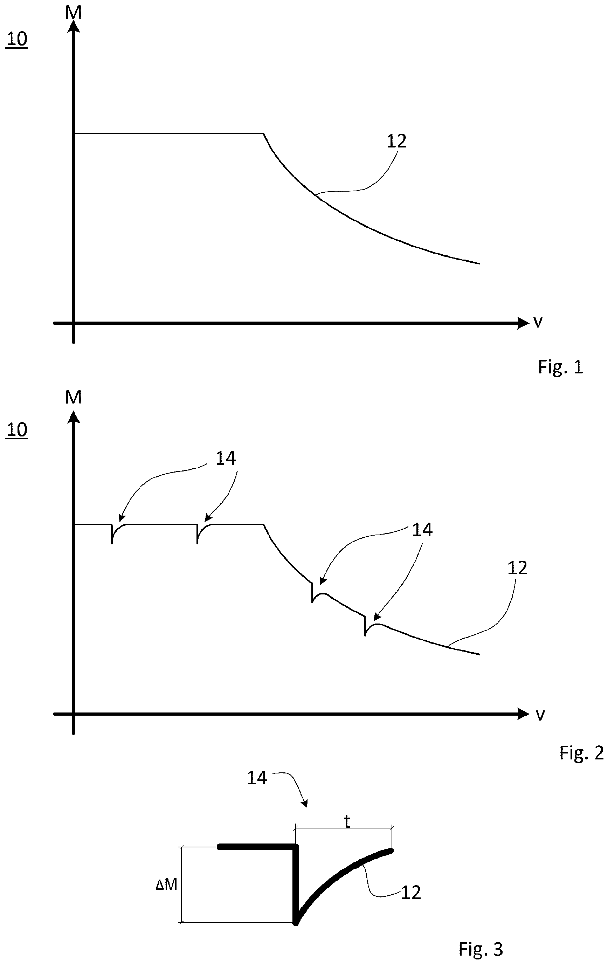

Fig. 1 und 2 zeigen ein insgesamt mit der Bezugsziffer 10 bezeichnetes Beschleunigungskurvendiagramm. Die dargestellte Beschleunigungskurve ist mit dem Bezugszeichen 12 bezeichnet. Wie Fig. 1 und Fig. 2 zeigen, ist auf der x-Achse die Geschwindigkeit v des Kraftfahrzeugs und auf der y-Achse das Drehmoment M aufgetragen.

Bei dem Kraftfahrzeug handelt es sich vorliegend um ein getriebeloses Elektrofahrzeug, d.h. beim Beschleunigen des Kraftfahrzeugs findet kein Gangwechsel statt.

Wie in Fig. 1 deutlich zu entnehmen ist, weist die Beschleunigungskurve 12 des getriebelosen Elektrofahrzeugs einen unterbrechungsfreien, d.h. im mathematischen Sinne, stetigen Kurvenverlauf auf. Dieser unterbrechungsfreie Kurvenverlauf stellt den ersten Betriebsmodus dar.

Verfahrensgemäß ist vorgesehen, dass das Kraftfahrzeug auch in einem zweiten Betriebsmodus betrieben werden kann. Dieser zweite Betriebsmodus ist in Fig. 2 dargestellt.

Wie Fig. 2 zu entnehmen ist, weist im zweiten Betriebsmodus die Beschleunigungskurve 12 einen gestuften bzw. unstetigen Kurvenverlauf auf. Vorliegend weist die Beschleunigungskurve 12 n=4 Unterbrechungen auf. Die Unterbrechungen sind nachfolgend auch mit der Bezugsziffer 14 bezeichnet. D.h. beim Beschleunigen kommt es viermal zu einem kurzfristigen Rückgang des Drehmoments und damit zu einer für den Fahrer spürbaren Zugkraftunterbrechung. Die Zugkraftunterbrechung in Kombination mit dem - aufgrund der Drehmomentänderung sich einstellenden - akustischen Effekts wirkt sich positiv auf die Aufmerksamkeit des Fahrers aus, da hierdurch insbesondere auch der Ermüdungseffekt reduziert wird, was sich wiederum positiv auf die Sicherheit im Straßenverkehr auswirkt.

Vorliegend ist zudem vorgesehen, dass neben dem sich aufgrund der Drehmomentänderung einstellenden akustischen Effekts, zudem bei jeder Unterbrechung ein zusätzliches akustisches Signal erzeugt und ausgeben wird. Hierdurch wird der oben genannte Vorteil, nämlich die Erhöhung der Aufmerksamkeit des Fahrers, nochmals zusätzlich verstärkt.

Besonders bevorzugt ist dabei, dass sowohl die Anzahl n der Unterbrechungen, als auch die Stärke ΔM des Drehmomentrückgangs bei einer Unterbrechung, als auch die zeitliche Dauer t einer Unterbrechung frei einstellbar sind. Die obigen Parameter, Stärke ΔM des Drehmomentrückgangs sowie zeitliche Dauer t einer Unterbrechung, sind aus Fig. 3 ersichtlich.

## Patentansprüche

1. Verfahren zum Betrieb eines Kraftfahrzeugs, wobei das Kraftfahrzeug eine Antriebseinheit aufweist, die so ausgebildet ist, dass im Falle einer Beschleunigung das Kraftfahrzeug mit einer stufenlosen Drehmomentenabgabe beschleunigt wird, wobei verfahrensgemäß vorgesehen ist, dass die Antriebseinheit in einem ersten und zweiten Betriebsmodus betreibbar ist, wobei im ersten Betriebsmodus das Kraftfahrzeug mittels der stufenlosen Drehmomentenabgabe unterbrechungsfrei beschleunigt wird, und im zweiten Betriebsmodus die stufenlose Drehmomentenabgabe in eine gestufte Drehmomentenabgabe umgestellt wird, sodass im zweiten Betriebsmodus das Kraftfahrzeug mittels der gestuften Drehmomentenabgabe unterbrechungsbehaftet beschleunigt wird,
**dadurch gekennzeichnet, dass**
im zweiten Betriebsmodus die unterbrechungsbehaftete Drehmomentenabgabe im Hinblick auf die Anzahl (n) der Unterbrechungen einstellbar ist.

2. Verfahren nach Anspruch 1,
**dadurch gekennzeichnet, dass**
die das Umstellung vom ersten Betriebsmodus in den zweiten Betriebsmodus und vice versa nach Betätigung eines Betätigungselements durchgeführt wird.

3. Verfahren nach einem der vorgenannten Ansprüche,
**dadurch gekennzeichnet, dass**
im zweiten Betriebsmodus die unterbrechungsbehaftete Drehmomentenabgabe in Hinblick auf die Stärke des Drehmomentrückgangs (ΔM) bei einer Unterbrechung einstellbar ist.

4. Verfahren nach einem der vorgenannten Ansprüche,
**dadurch gekennzeichnet, dass**
im zweiten Betriebsmodus die unterbrechungsbehaftete Drehmomentenabgabe in Hinblick auf die Dauer (t) einer Unterbrechung einstellbar ist.

5. Verfahren nach einem der vorgenannten Ansprüche,
**dadurch gekennzeichnet, dass**
im zweiten Betriebsmodus bei einer Unterbrechung in der Drehmomentenabgabe ein akustisches Signal erzeugt wird.

6. Verfahren nach Anspruch 5,
**dadurch gekennzeichnet, dass**
die Ausgabe des akustischen Signals aktivierbar/deaktivierbar ist.

7. Verfahren nach Anspruch 5 oder 6,
**dadurch gekennzeichnet, dass**
die Art des auszugebenden akustischen Signals wählbar ist.

## Claims

1. Method for operating a motor vehicle, the motor vehicle having a drive unit which is configured in such a way that, in the case of an acceleration, the motor vehicle is accelerated with a stepless torque output, it being provided according to the method that the drive unit can be operated in a first and second operating mode, the motor vehicle being accelerated without interruption by means of the stepless torque output in the first operating mode, and the stepless torque output being changed over into a stepped torque output in the second operating mode, with the result that the motor vehicle is accelerated with interruptions by means of the stepped torque output in the second operating mode, **characterized in that** the torque output with interruptions can be said with regard to the number (n) of interruptions in the second operating mode.

2. Method according to Claim 1, **characterized in that** the changeover from the first operating mode into the second operating mode and vice versa is carried out after actuation of an actuating element.

3. Method according to either of the preceding claims, **characterized in that**, in the second operating mode, the torque output with interruptions can be said with regard to the magnitude of a torque decrease (ΔM) in the case of an interruption.

4. Method according to one of the preceding claims, **characterized in that**, in the second operating mode, the torque output with interruptions can be said with regard to the duration (t) of an interruption.

5. Method according to one of the preceding claims, **characterized in that**, in the second operating mode, an acoustic signal is produced in the case of an interruption in the torque output.

6. Method according to Claim 5, **characterized in that** the output of the acoustic signal can be activated/deactivated.

7. Method according to Claim 5 or 6, **characterized in that** the type of acoustic signal to be output can be selected.

## Revendications

1. Procédé d'exploitation d'un véhicule automobile, le véhicule automobile présentant une unité d'entraînement qui est configurée de telle sorte qu'en cas d'accélération, le véhicule automobile est accéléré avec une sortie de couple continue, dans lequel il est prévu, conformément au procédé, que l'unité d'entraînement peut être exploitée dans un premier et un deuxième mode d'exploitation, le véhicule automobile étant accéléré sans interruption dans le premier mode d'exploitation au moyen de la sortie de couple continue, et dans le deuxième mode d'exploitation, la sortie de couple continue étant transformée en une sortie de couple étagée, de telle sorte que dans le deuxième mode d'exploitation, le véhicule automobile est accéléré avec des interruptions au moyen de la sortie de couple étagée,
**caractérisé en ce que**
dans le deuxième mode d'exploitation, la sortie de couple avec des interruptions peut être réglée en ce qui concerne le nombre (n) d'interruptions.

2. Procédé selon la revendication 1,
**caractérisé en ce que**
le passage du premier mode d'exploitation au deuxième mode d'exploitation et vice versa est effectué après l'actionnement d'un élément d'actionnement.

3. Procédé selon l'une quelconque des revendications précédentes,
**caractérisé en ce que**
dans le deuxième mode d'exploitation, la sortie de couple avec des interruptions peut être réglée en ce qui concerne l'importance de la chute de couple (ΔM) lors d'une interruption.

4. Procédé selon l'une quelconque des revendications précédentes,
**caractérisé en ce que**
dans le deuxième mode d'exploitation, la sortie de couple avec des interruptions peut être réglée en ce qui concerne la durée (t) d'une interruption.

5. Procédé selon l'une quelconque des revendications précédentes,
**caractérisé en ce que**
dans le deuxième mode d'exploitation, un signal acoustique est généré lors d'une interruption dans la sortie de couple.

6. Procédé selon la revendication 5,
**caractérisé en ce que**
l'émission du signal acoustique peut être activée/désactivée.

7. Procédé selon la revendication 5 ou 6,
**caractérisé en ce que**
le type de signal acoustique à émettre peut être sélectionné.
